# EUROPÄISCHE PATENTANMELDUNG

(11) **EP 1 447 597 A2**
(43) Veröffentlichungstag der Anmeldung: **18.08.2004**
(21) Anmeldenummer: 04002666.8
(22) Anmeldetag: 06.02.2004
(51) Int. Cl.: F16H 61/04, F16H 59/18

(54) **Verfahren und Vorrichtung zum Steuern der Übersetzungsänderung eines im Antriebsstrang eines Kraftfahrzeuges enthaltenen Getriebes mit unter Last veränderbarer Übersetzung**

(30) Priorität: 11.02.2003 DE 10305515
(71) Anmelder: LuK Lamellen und Kupplungsbau Beteiligungs KG, 77815 Bühl (DE)
(72) Erfinder: Küpper, Klaus Dr., 77815 Bühl (DE); Schneider, Georg, 76137 Karlsruhe (DE)

(57) **Zusammenfassung**

Bei einem Parallelschaltgetriebe (10) wird eine Zughochschaltung abhängig von vorbestimmten Betriebszuständen, beispielsweise bei voll betätigtem Fahrpedal (73), ohne elektronisch gesteuerten Motoreingriff durchgeführt. Bei einer Schaltung in einen höheren Gang wird die Motorleistung abhängig vom Betriebszustand des Antriebsstrangs für die Drehzahlerhöhung des Motors und für den Vortrieb des Fahrzeugs genutzt.

## Beschreibung

Die Erfindung bezieht sich auf ein Verfahren und eine Vorrichtung zum Steuern der Übersetzungsänderung eines im Antriebsstrang eines Kraftfahrzeugs enthaltenen Getriebes mit unter Last veränderbarer Übersetzung. Genauer betrifft die Erfindung ein Verfahren zum Hochschalten eines im Antriebsstrang eines Kraftfahrzeugs enthaltenen, automatisch schaltenden Parallelschaltgetriebes. Weiter betrifft die Erfindung ein Verfahren zum Vergrößern der Übersetzung eines im Antriebsstrang eines Kraftfahrzeugs enthaltenen, seine Übersetzung zugkraftunterbrechungsfrei automatisch verändernden Getriebes. Zusätzlich betrifft die Erfindung eine Vorrichtung zum Durchführen der vorgenannten Verfahren.

Automatisierte Antriebsstränge, bei denen unter Last schaltende automatische Getriebe von Aktoren entsprechend vorbestimmten Programmen betätigt werden, finden zunehmend Verwendung in Pkws. Solche Getriebe erhöhen nicht nur den Fahrkomfort, sondern ermöglichen auch erhebliche Verbrauchseinsparungen, da vermehrt mit niedrigen Drehzahlen gefahren wird.

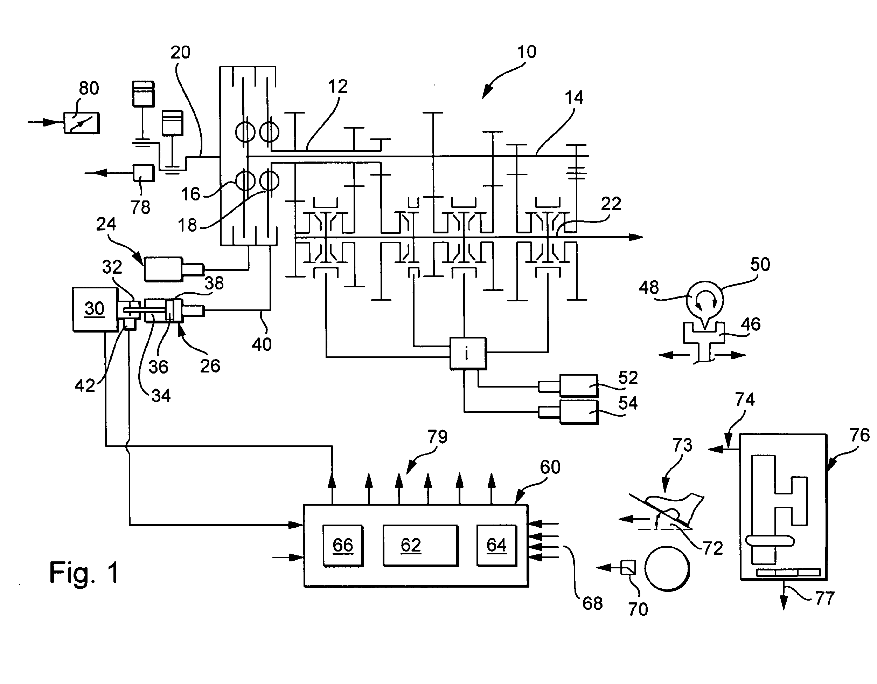

Fig. 1 zeigt einen Teil eines Antriebsstrangs eines mit einem solchen Getriebe ausgerüsteten Fahrzeugs. Ein insgesamt mit 10 bezeichnetes Doppelkupplungsgetriebe, auch Parallelschaltgetriebe genannt, weist zwei Eingangswellen 12 und 14 auf, die über je eine Kupplung 16 und 18 mit der Kurbelwelle 20 einer Brennkraftmaschine verbindbar sind. Auf den Eingangswellen 12 und 14 sind Zahnräder angeordnet, die mit auf einer Ausgangswelle 22 verschiebbar und drehfest angeordneten Zahnrädern zum Schalten unterschiedlicher Gänge in Eingriff bringbar sind. Die Ausgangswelle 22 ist beispielsweise mit einem Hinterachsdifferential des Fahrzeugs verbunden.

Jeder Kupplung 16 bzw. 18 ist ein Aktor 24 bzw. 26 für deren Betätigung zugeordnet.

Der Aktor 26 ist beispielhaft genauer dargestellt und enthält einen Elektromotor 30, dessen Ausgangsritzel 32 ein Innengewinde aufweist, das mit einer Gewindestange 34 kämmt, die gleichzeitig Stange eines Kolbens 36 ist, der in einem Hydraulikzylinder 38 arbeitet. Der Hydraulikzylinder 38 ist über eine hydraulische Übertragungsstrecke 40 mit einem Betätigungsglied, beispielsweise einem Ausrückhebel, der Kupplung 18 verbunden. Zur Erfassung der Stellung des Kolbens 36 bzw. des Ausrückhebels der Kupplung 18 dient ein Sensor 42, beispielsweise ein Inkrementzähler, der den Drehwinkel des Ausgangsritzels 36 erfasst. Aus Änderungen des Drehwinkels kann wegen des Gewindeeingriffs zwischen dem Ritzel 32 und der Gewindestange 34 auf die lineare Verschiebung der Gewindestange 34 geschlossen werden. Um eine Referenzstellung zu haben, auf die bei der Verschiebung des Kolbens 36 Bezug genommen wird, kann in an sich bekannter Weise eine in dem Hydraulikzylinder 38 ausgebildete Schnüffelbohrung überfahren werden, bei deren Überfahren sich in der hydraulischen Übertragungsstrecke 40 Druck aufbaut, was durch eine Zunahme des Moments bzw. Leistungsaufnahme des E-Motors 30 festgestellt werden kann. Als weitere Referenzstellungen können Druckpunkte oder Anschläge der Kupplung angefahren werden.

Die auf der Ausgangswelle 22 des Doppelkupplungsgetriebes 10 angeordneten Zahnräder werden mittels Schaltgabeln 46 bewegt, die mit Schaltfingern 48 zusammenwirken, die an einer Schaltwelle 50 angebracht sind. Es kann beispielsweise eine Schaltwelle 50 mit mehreren Schaltfingern 48 vorgesehen sein, die alle auf der Ausgangswelle 22 angeordneten Zahnräder betätigt, oder es können beispielsweise zwei Schaltwellen 50 vorgesehen sein, die die Schaltgabeln derjenigen Zahnräder betätigen, die jeweils einer der Eingangswellen 12 bzw. 14 zugeordnet sind. Für jede Schaltwelle 50 sind zwei Aktoren vorgesehen, einer, der die Schaltwelle 50 zum Einlegen von Gängen um ihre Achse hin- und herdreht und ein anderer, der die Schaltwelle 50 gemäß der Figur senkrecht zur Papierebene verschiebt, um zwischen verschiedenen Schaltgassen zu wählen.

Die einer Schaltwelle 50 zugeordneten Aktoren sind in der Figur mit 52 und 54 bezeichnet. Die Wegerfassung kann ähnlich wie vorstehend anhand des Elektromotors 30 erläutert erfolgen. Um die Absolutstellung der Schaltwelle 50 bzw. des Schaltfingers 48 zu kennen, werden Referenzpositionen angefahren, beispielsweise Anschläge an einer Wählgasse und Schaltgasse oder Anschläge, die die Schaltgabeln 46 selbst anfahren.

Zur Steuerung der genannten Aktoren ist eine Steuereinrichtung bzw. ein Steuergerät 60 vorgesehen, das einen Mikroprozessor 62 mit Programmspeicher 64 und Datenspeicher 66 enthält.

Eingänge 68 des Steuergerätes 60 sind mit unterschiedlichen, zweckentsprechenden Sensoren oder Stellungsgebern verbunden, beispielsweise einem Raddrehzahlsensor 70 zum Erfassen der Drehzahl eines Rades, einem Sensor 72 zur Erfassung der Stellung eines Fahrpedals 73, einem Stellungsgeber 74 zur Erfassung der Stellung des Wählhebels einer Getriebebetätigungseinheit 76, einem Ausgang 77 der Getriebebetätigungseinheit 76, mit dem die Betätigung unterschiedlicher Steuerprogramme übertragen wird, beispielsweise eines Komfort- oder eines Sportprogramms, einem Drehzahlsensor 78 zur Erfassung der Drehzahl der Brennkraftmaschine usw. Es versteht sich, dass das Steuergerät 60 auch derart aufgebaut sein kann, dass es selbst Fahrbedingungen und/oder Fahrerprofile erkennt und entsprechende Programme, wie Bergprogramm oder Sportprogramm, aktiviert.

Ausgänge 79 des Steuergerätes 60 sind mit den Aktoren sowie, sofern durch einen weiteren Aktor betätigt, einem Laststellglied 80 der Brennkraftmaschine verbunden.

Der Aufbau und die Funktion der beschriebenen Anordnung, die in vielfältiger Weise abgeändert werden kann, sind an sich bekannt und werden daher nicht näher erläutert.

Ein Problem bei einem solchen, automatisch betätigten Parallelschaltgetriebe, oder ganz allgemein bei automatisierten Schaltgetrieben, liegt darin, dass unter Umständen bei einem Beschleunigungsvergleich nicht die Zeiten erreicht werden, die mit einem handgeschalteten Schaltgetriebe erreichbar sind.

Dies liegt im Allgemeinen daran, dass bei einem von Hand geschalteten Getriebe während der Beschleunigungsmessung das Fahrzeug außerhalb eines zulässigen Bereiches einzelner Komponenten betrieben wird, beispielsweise mit extrem hohen Schaltkräften, "rauchender" Kupplung usw. Bei automatisierten Schaltgetrieben ist dies in der Regel nicht möglich, da ansonsten die Gefahr besteht, dass bei häufiger Wiederholung solcher Beschleunigungsversuche Komponenten des Antriebsstrangs zerstört werden. Bei mit Zugkraftunterbrechung schaltenden, automatisierten Schaltgetrieben wird während der Schaltung die Motordrehzahl durch Eingriff in die Zündung oder unmittelbar in das Laststellglied begrenzt, da ansonsten der Motor während des Schaltens unkontrolliert hochdrehen würde. Bei einem Fahrzeug mit Parallelschalt- bzw. Doppelkupplungsgetriebe besteht die Notwendigkeit zu langsamen Gangwechseln oder einem die Leistung reduzierenden Motoreingriff, um ein Wegtouren des Motors während der Schaltung zu vermeiden, an sich nicht, da ein nächst zu schaltender Gang durch Einrücken eines Zahnrades der gerade mit offener Kupplung betriebenen Eingangswelle mit einem Zahnrad der Ausgangswelle vorgewählt werden kann und dann lediglich durch Umschalten der Kupplungen 16, 18 wirksam geschaltet wird. Dennoch wird bei Hochschaltungen nach Ende der Überschneidungsphase der beiden Kupplungen 16 und 18 ein reduzierender Motoreingriff durchgeführt, um die Motordrehzahl ohne Überhöhung des Abtriebsmoments auf die Zieldrehzahl abzusenken. In Folge dieses Motoreingriffes wird die mögliche Vortriebsleistung nicht voll ausgeschöpft, wodurch Beschleunigungszeit verschenkt wird.

Eine Eigenschaft automatischer Getriebe besteht darin, dass diese Getriebe im Bedarfsfall selbsttätig in einen niedrigeren Gang zurückschalten bzw. auf eine höhere Übersetzung übergehen, wenn die Zugkraft nicht mehr ausreicht, um einen Fahrerwunsch zu erfüllen. Eine Eigenart lastschaltender Getriebe, insbesondere von Parallelschaltgetrieben, aber auch von konventionellen mit Planetensätzen arbeitenden automatischen Getrieben oder CVT-Getrieben (Getriebe mit kontinuierlich verstellbarer Übersetzung), liegt darin, dass die Motorleistung beim Übergang zu einer höheren Übersetzung sowohl für die Erhöhung der Drehzahl des Motors als auch für den Vortrieb des Fahrzeugs genutzt wird, wodurch der Fahrkomfort nachteilig beeinflusst werden kann.

Der Erfindung liegt die Aufgabe zugrunde, Abhilfe für die vorgenannten Probleme zu schaffen.

Eine erste Lösung der Erfindungsaufgabe wird mit einem Verfahren zum Hochschalten eines im Antriebsstrang eines Kraftfahrzeugs enthaltenen, automatisch schaltenden Parallelschaltgetriebes mit zwei parallel geschalteten Antriebssträngen mit je einer Kupplung, wobei der jeweilige Antriebszweig durch Einrücken der zugehörigen Kupplung aktivierbar ist, so dass im nicht aktivierten Antriebszweig ein neuer Gang eingelegt werden kann und der neue Gang durch Ausrücken der einen Kupplung und Einrücken der anderen Kupplung wirksam geschaltet werden kann, erreicht, bei welchem Verfahren eine Zughochschaltung des Parallelschaltgetriebes abhängig von vorbestimmten Betriebszuständen ohne elektronisch gesteuerten Motoreingriff erfolgt.

Gemäß einer Weiterbildung des erfindungsgemäßen Verfahrens ist ein vorbestimmter Betriebszustand durch ein voll betätigtes Fahrpedal gegeben.

Gemäß einer weiteren Durchführungsform des erfindungsgemäßen Verfahrens ist ein vorbestimmter Betriebszustand durch ein zusätzlich betätigtes Fahrprogramm gegeben.

Weiterhin kann ein vorbestimmter Betriebszustand dadurch gegeben sein, dass das Fahrzeug bei der Betätigung des Fahrpedals über ein vorbestimmtes Maß hinaus durch Betätigen der Bremsen im Stillstand gehalten wird.

Für kürzest mögliche Beschleunigungszeiten wird das Verfahren vorteilhafter Weise derart durchgeführt, dass das Ausrücken der einen Kupplung und das Einrücken der anderen Kupplung derart gesteuert werden, dass der Motor während des Schaltens zumindest teilweise mit einer seiner Höchstleistung entsprechenden Drehzahl läuft.

Eine weitere Lösung der Erfindungsaufgabe wird mit einem Verfahren zum Vergrößern der Übersetzung eines im Antriebsstrang eines Kraftfahrzeugs enthaltenen, seine Übersetzungszugkraft unterbrechungsfrei automatisch verändernden Getriebes, insbesondere Parallelschaltgetriebes erreicht, bei welchem Verfahren bei unter Last erfolgender Vergrößerung der Übersetzung des Getriebes die Aufteilung der Motorleistung in einen für die Drehzahlerhöhung des Motors verfügbaren Teil und einen für den Vortrieb des Motors verfügbaren Teil abhängig von Betriebszuständen des Antriebsstrangs verändert wird.

Vorteilhaft wird der für die Drehzahlerhöhung des Motors verfügbare Teil der Motorleistung mit zunehmend rascher Betätigung des Fahrpedals vergrößert.

Bei einer Übersetzungserhöhung ohne Veränderung der Stellung des Gaspedals wird die Motorleistung vorteilhafter Weise weitgehend für den Vortrieb des Fahrzeugs genutzt.

Bei einem weiteren erfindungsgemäßen Verfahren zum Steuern eines Parallelschaltgetriebes wird bei im Schubbetrieb befindlichen Getriebe vor dem Unterschreiten einer Mindestgeschwindigkeit des Fahrzeugs und vor dem Auskuppeln eines aktivierten Fahrgangs ein Anfahrgang eingelegt.

Eine dritte Lösung der Erfindungsaufgabe wird mit einer Vorrichtung zum Steuern der Übersetzungsänderung eines im Antriebsstrang eines Kraftfahrzeugs enthaltenen Getriebes mit unter Last veränderbarer Übersetzung erzielt, die enthält: ein Getriebe, Aktoren zur Veränderung der Übersetzung des Getriebes und ein mit im Antriebsstrang des Kraftfahrzeugs enthaltenen Sensoren verbundene Steuergerät mit einem Mikroprozessor und Zugangsspeichern, welches Steuergerät die Aktoren zur Durchführung zumindest eines der vorgenannten Verfahren steuert.

Die Erfindung wird im Folgenden anhand schematischer Zeichnungen beispielsweise und mit weiteren Einzelheiten erläutert.

Es stellen dar:
Fig. 1 ein Blockschaltbild von Teilen eines Antriebsstrangs eines Fahrzeugs, der in seinem Aufbau an sich bekannt ist und in der Beschreibungseinleitung bereits erläutert wurde,
Fig. 2 verschiedene Diagramme zur Erläuterung eines Hochschaltens des Getriebes gemäß Fig. 1 und
Fig. 3 Diagramme zur Erläuterung eines Rückschaltens des Getriebes gemäß Fig. 1.

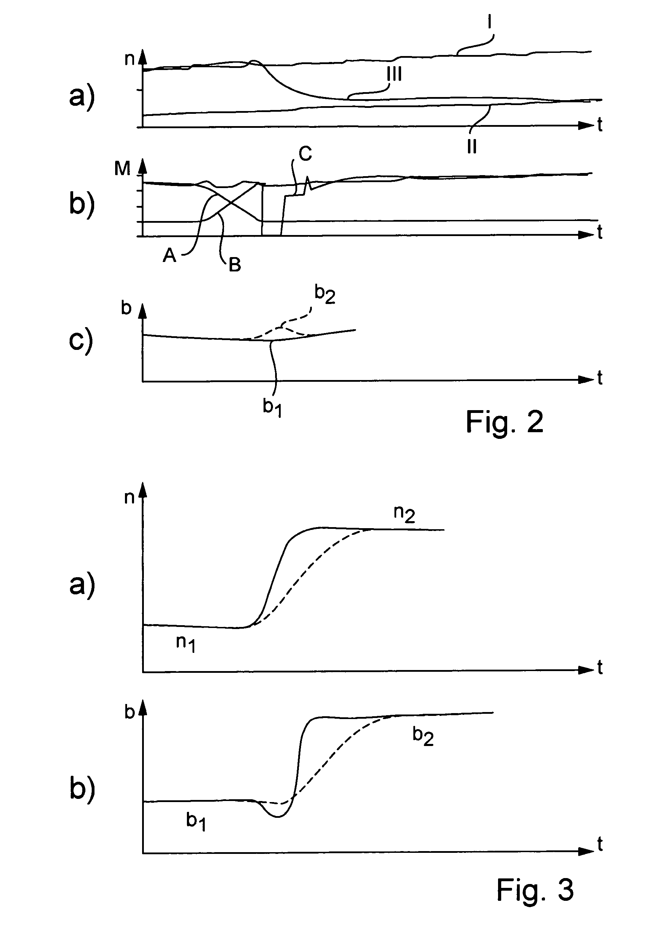

Anhand der Fig. 2 wird zunächst ein konventionelles Hochschalten des Getriebes 10 der Fig. 1 erläutert.

In Fig. 2a sind Drehzahlen über der Zeit dargestellt. Die Kurve I gibt die Drehzahl derjenigen der Getriebeeingangswellen 12 und 14 an, die zunächst in einem niedrigeren Gang aktiviert ist. Sei angenommen, dies sei die Eingangswelle 12 bei geschlossener Kupplung 18, wobei das Fahrzeug im zweiten Gang fährt. Die Kurve II gibt die Drehzahl der Eingangswelle 14 an, die diese bei eingelegtem dritten Gang hat und die entsprechend niedriger als die Drehzahl der Eingangswelle 12 ist. Bei einem Schalten vom zweiten Gang auf den dritten Gang wird die zunächst geschlossene Kupplung 18 geöffnet und die zunächst geöffnete Kupplung 16 geschlossen, so dass die Drehzahl der Kurbelwelle 20 des Motors (Kurve III) sich von der Kurve I löst und an die Kurve II annähert.

In Fig. 2b stellt die Kurve A die zunächst geschlossene und dann offene Kupplung 18 dar, die Kurve B stellt die zunächst offene und dann geschlossene Kupplung 16 dar und die Kurve C stellt das Motormoment M in gleicher zeitlicher Darstellung wie die Kurven I bis III und A, B dar. Wie ersichtlich, wird das Motormoment (Kurve C) durch Eingriff in die Zündung oder das Laststellglied 80 (Fig. 1) während der Absenkung der Motordrehzahl (Kurve III) zurückgenommen, damit die durch die Drehzahlminderung des Motors frei werdende "Trägheitsleistung" sich nicht in unkomfortablen, zusätzlichen Vortrieb umsetzt. Insgesamt wird ein Beschleunigungsverlauf gemäß der durchgezogenen Kurve b₁ gemäß Fig. 2c erreicht. Wegen der hohen "Trägheitsleistung" des Motors kann es für ein möglichst komfortables Schalten erforderlich sein, das Motormoment M kurzzeitig auf einen Wert unter Null abzusenken, wobei ein Teil der während der Drehzahlabsenkung frei werdenden Trägheitsleistung bzw. Rotationsenergie des Motors verwendet wird, um den Motor zu drehen und der übrige Teil in die Fahrzeugbeschleunigung fließt.

Für eine fahdeistungsoptimale Auslegung ist es vorteilhaft, auf den Motor- bzw. Drehmomenteingriff gemäß der Kurve C beim Hochschalten zu verzichten. Die durch die Drehzahlabsenkung des Motors frei werdende kinetische Energie wird dann in zusätzliche Beschleunigung umgesetzt, wie durch die punktierte Kurve b₂ gemäß Fig. 2c angedeutet. Es versteht sich, dass wegen der über die Übersetzungen vorgegebenen Drehzahlen der Eingangswellen 12 und 14 des Getriebes nicht die gesamte bei der Drehzahlabsenkung des Motors verfügbare Rotationsenergie in Vortrieb umgesetzt werden kann, sondern ein Teil als Wärme in der schließenden Kupplung umgesetzt wird. Infolge der hohen Belastung der schließenden Kupplung und der deutlich spürbaren Beschleunigungsüberhöhung ist es vorteilhaft, auf einen Motoreingriff nur in bestimmten Situationen zu verzichten, in denen maximale Beschleunigung gefordert und dadurch momentane Überhöhungen akzeptiert bzw. erwünscht sind.

Beispiele solcher Situationen sind:
Fahrleistungsorientierte Situation, beispielsweise Fahren mit voll durchgetretenem Fahrpedal (Kickdown). Der Kickdown-Betrieb kann mit zusätzlichen Bedingungen gekoppelt sein, damit das Steuergerät 60 ein Hochschalten ohne Motoreingriff durchführt. Solche zusätzlichen Bedingungen können sein:
   - Losfahren aus dem Stand mit voll durchgetretenem Gaspedal (Erkennung beispielsweise über den Raddrehzahlsensor 70 (oder einen Sensor zur Erfassung der Drehzahl der Ausgangswelle 22 des Getriebes), wobei die Unterdrückung eines Motoreingriffes beispielsweise nur während einer vorbestimmten Zeitdauer nach dem Losfahren erfolgen kann und/oder
   - Kickdownanfahrt mit zunächst festgebremsten Fahrzeug, wie es bei Beschleunigungsmessungen üblich ist, und/oder
   - Aktivieren eines extrem fahrleistungsorientierten Modus (über an der Betätigungseinheit 76 oder in der Schalttafel vorgesehene Bedienelemente).

Wenn eine dieser beispielhaft aufgeführten Eintrittsbedingungen vom Steuergerät 60 als erfüllt erkannt wird, wird der Motoreingriff bei Hochschaltungen so lange nicht aktiviert, wie die Fahrsituation bzw. der jeweilige Betriebszustand des Antriebsstrangs als vorliegend erkannt wird. Sobald dies nicht mehr der Fall ist, beispielsweise Gaspedal nicht mehr in Maximalstellung, Zeitdauer abgelaufen, Programm nicht mehr gewählt, wird auf die normale Schaltablaufsteuerung übergegangen, bei der aus Komfort- und Lebensdauergründen beim Hochschalten ein Motoreingriff erfordert.

Die beschriebenen Unterdrückung eines Motoreingriffs beim Hochschalten mit deutlichen Drehzahlverminderungen des Motors kann bei allen Arten von unter Last auf niedrigere Übersetzung schaltenden Getrieben angewendet werden, beispielsweise konventionellen Automatgetrieben mit über Kupplungen gesteuerten Planetenstufen, CVT-Getrieben (beispielsweise Kegelscheibenumschlingungsgetrieben) usw. Für größtmögliche Beschleunigung kann es vorteilhaft sein, die Kupplungen während des Schaltens derart zu steuem, dass der Motor (bei voll betätigtem Fahrpedal) auf die Höchstleistungsdrehzahl hochdreht und dann durch die schleifende Kupplung auf die neue Drehzahl abgebremst wird.

Anhand der Fig. 3 werden im Folgenden Rückschaltungen des Getriebes 10 gemäß Fig. 1 erläutert. Die Kurven der Fig. 3a zeigen die Motordrehzahl n abhängig von der Zeit, die Kurven gemäß Fig. 3b zeigen die Beschleunigung b abhängig von der Zeit.

Sei angenommen, das Fahrzeug fährt in einem höheren Gang mit der Drehzahl n₁, die beispielsweise, obwohl der Fahrer etwas Gas gibt, nicht zunimmt, so dass das Steuergerät 60 das Schalten des Getriebes in einen niedrigeren Gang steuert, wobei die Drehzahl n₁ auf die höhere Drehzahl n₂ übergeht. Die durchgezogene Kurve zeigt einen relativ raschen Anstieg der Motordrehzahl n von n₁ auf n₂. Für diesen raschen Drehzahlanstieg wird ein bei der jeweiligen Fahrpedalstellung mehr oder weniger großer Anteil der Motorleistung benötigt, der für den Vortrieb des Fahrzeugs fehlt, so dass die Beschleunigung b zunächst einbricht und dann, wenn der Motor auf seiner höheren Drehzahl ist, den konstanten größeren Wert b₂ annimmt. Wegen des Beschleunigungseinbruchs ist der beschriebene Rückschaltvorgang verhältnismäßig unkomfortabel, führt jedoch dann zu einer raschen Zunahme der Beschleunigung.

Der Rückschaltvorgang wird komfortabler, wenn sich die Drehzahl n₁ mit einem kleineren Gradienten auf die Drehzahl n₂ erhöht. Für die Beschleunigung des Fahrzeugs steht dann zunächst gegenüber dem vor geschilderten Fall eine höhere Motorleistung zur Verfügung, so dass die Beschleunigung b₁ weniger einbricht und sich mehr oder weniger stetig dem höheren Wert b₂ annähert.

Erfindungsgemäß wird der Rückschaltvorgang vom Steuergerät 60 aus abhängig von Betriebsparametern des Antriebsstrangs derart gesteuert, dass die während der Drehzahlerhöhung des Motors verfügbare Leistung in zweckentsprechender Weise für die Drehzahlerhöhung des Motors selbst und die Beschleunigung bzw. Zugkraft des Fahrzeugs eingesetzt wird.

Beispielsweise ist es vorteilhaft, bei rascherer Betätigung des Fahrpedals bzw. hohem Pedalgradienten einen höheren Anteil der Motorleistung für die Drehzahlerhöhung des Motors selbst zu nutzen, damit die höhere Drehzahl und damit die höhere Motorleistung möglichst rasch realisiert wird, auch wenn damit ein Komfortverlust infolge der kurzzeitigen Zugkraftverminderung verbunden ist. Die Aufteilung der Motorleistung auf die Beschleunigungsleistung für den Motor selbst und Beschleunigungsleistung für das Fahrzeug erfolgt durch aufeinander gestimmte Betätigung der Kupplungen 16 und 18 (Fig. 1), wobei insbesondere ein rasches Einrücken der einzurückenden Kupplung zu einem Drehzahlverlauf gemäß der ausgezogenen Kurve führt und ein langsames Einrücken zu einem Drehzahlverlauf gemäß der gestrichelten Kurve führt.

Es versteht sich, dass die unterschiedlichsten Arten der abgestimmten Kupplungsbetätigungen zusammen mit einer vom Steuergerät her erfolgenden Steuerung des Laststellgliedes 80 möglich sind, beispielsweise auch eine Steuerung derart, dass ein rasches Niedertreten des Gaspedals zusätzlich dazu führt, dass das Laststellglied 80 während des Zurückschaltens zusätzlich geöffnet wird, um zusätzliche Beschleunigungsleistung für den Motor selbst verfügbar zu haben. Dabei kann es durchaus zu einer Überhöhung der Drehzahl über n₂ kommen, die wiederum zu einer Beschleunigung führt, die kurzzeitig über der Beschleunigung b₂ liegt.

Wird bei einer konstanten Fahrpedalstellung durch Änderung der äußeren Umstände, beispielsweise höherer Fahrtwiderstand infolge einer Steigung oder starken Gegenwindes, ein niedriger Gang durch Wechsel auf ein anderes im Steuergerät abgelegtes Kennfeld angefordert, so erwartet der Fahrer hier eine ruckfreie Schaltung, so dass für die Eigenbeschleunigung des Motors nur ein geringer Leistungsanteil eingesetzt wird, d.h. die schließende Kupplung entsprechend verschleifend schließt.

Die Leistungsverteilung beim Schalten kann nicht nur stufenweise, beispielsweise abhängig von einem ausgewählten Fahrprogramm (Bergprogramm, Sportprogramm, usw.) verändert werden, sondern auch kontinuierlich. Dies ist insbesondere sinnvoll, wenn die eigentlichen Schaltkennlinien kontinuierlich verschoben werden, beispielsweise in Abhängigkeit von einer detektierten Steigung der Fahrbahn, starkem Gegenwind, dem Gewicht des Fahrzeugs oder einem vom Fahrerverhalten abhängigen Sportmaß. Diese und andere Größen können einzeln oder in Kombination mittels geeigneter Zusammenhänge die Leistungsverteilung bestimmen.

Wird eine kontinuierliche Eingangsgröße zur Variation der Leistungsverteilung genutzt, so kann die Leistungsverteilung entsprechend jeder beliebigen Funktion stetig oder auch unstetig variiert werden.

Die beschriebene unterschiedliche Verteilung der Motorleistung auf die Beschleunigungsleistung zum Erhöhen der Motordrehzahl und für die Beschleunigung des Fahrzeugs kann bei Lastschaltgetrieben unterschiedlichster Bauart eingesetzt werden, wie Parallelschaltgetrieben, herkömmlichen Automatgetrieben mit Planetenstufen oder Getrieben mit kontinuierlich variabler Übersetzung.

Ein bei Parallelschaltgetrieben bisweilen auftretendes Problem liegt darin, dass beim Anhalten des Fahrzeugs oder kurz vor dem Anhalten des Fahrzeugs bei niederer Geschwindigkeit komfortbeeinträchtigende Rucke zu spüren sind. Solche Rucke lassen sich dadurch vermeiden, dass der erste bzw. Anfahrgang bei im Schub befindlichem Parallelschaltgetriebe, d.h. bei durch das Fahrzeug angetriebenem Motor, unterhalb einer bestimmten Mindestgeschwindigkeit bereits vorgewählt bzw. eingelegt wird, bevor die Kupplung des eingelegten Fahrgangs, im Allgemeinen der zweite Gang, öffnet. Die vorbestimmte Geschwindigkeit kann beispielsweise derart gewählt sein, dass sie diejenige Geschwindigkeit ist, bei der das Fahrzeug im ersten Gang besser beschleunigt als im zweiten Gang. Durch die rechtzeitige Vorwahl bzw. Schaltung des ersten Gangs wird erreicht, dass sich das mit einer Synchronisierung erfolgende Einlegen des ersten Gangs nicht störend auf die noch eingekuppelte Welle des zweiten Gangs auswirken kann.

Die nachfolgenden Patentansprüche sind Formulierungsvorschläge ohne Präjudiz für die Erzielung weitergehenden Patentschutzes. Die Anmelderin behält sich vor, weitere, nur in der Beschreibung und/oder den Zeichnungen offenbarte Merkmalskombinationen zu beanspruchen. In Unteransprüchen verwendete Rückbeziehungen weisen auf die weitere Ausbildung des Gegenstandes des unabhängigen Anspruchs durch die Merkmale des jeweiligen Unteranspruchs hin; sie sind nicht als ein Verzicht zur Erzielung eines selbstständigen Schutzes für die Merkmalskombinationen der Unteransprüche zu verstehen. Da die Gegenstände der Unteransprüche im Hinblick auf den Stand der Technik am Prioritätstag eigene und unabhängige Erfindungen bilden können, behält sich die Anmelderin vor, sie zum Gegenstand unabhängiger Ansprüche oder Teilungserklärungen zu machen. Sie können weiterhin auch selbstständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die z. B. durch Abwandlung von einzelnen, in Verbindung mit denen der allgemeinen Beschreibung und Ausführungsform, sowie in den Ansprüchen beschriebenen und den Zeichnungen enthaltenen Merkmalen bzw. Elementen oder Verfahrensschritten für den Fachmann im Hinblick auf die Lösung der Aufgabe oder die Erzielung von Vorteilen entnehmbar sind, und durch kombinierbare Merkmale zu einem neuen Gegenstand oder zu neuen Verfahrensschritten bzw. Schrittfolgen führen.

## Patentansprüche

1. Verfahren zum Hochschalten eines im Antriebsstrang eines Kraftfahrzeugs enthaltenen, automatisch schaltenden Parallelschaltgetriebes (10) mit zwei parallel geschalteten Antriebszweigen mit je einer Kupplung (16, 18), wobei der jeweilige Antriebszweig durch Einrücken der zugehörigen Kupplung aktivierbar ist, so dass im nicht aktivierten Antriebszweig ein neuer Gang eingelegt werden kann und der neue Gang durch Ausrücken der einen Kupplung und Einrücken der anderen Kupplung wirksam geschaltet werden kann, bei welchem Verfahren eine Zughochschaltung des Parallelschaltgetriebes abhängig von vorbestimmten Betriebszuständen ohne elektronisch gesteuerten Motoreingriff erfolgt.

2. Verfahren nach Anspruch 1, wobei ein vorbestimmter Betriebszustand durch ein voll betätigtes Fahrpedal (73) gegeben ist.

3. Verfahren nach Anspruch 2, wobei ein vorbestimmter Betriebszustand durch ein zusätzlich betätigtes Fahrprogramm gegeben ist.

4. Verfahren nach Anspruch 2 oder 3, wobei ein vorbestimmter Betriebszustand dadurch gegeben ist, dass das Fahrzeug bei der Betätigung des Fahrpedals (73) über ein vorbestimmtes Maß hinaus durch Betätigen der Bremsen im Stillstand gehalten wird.

5. Verfahren nach einem der Ansprüche 1 bis 4, wobei das Ausrücken der einen Kupplung und das Einrücken der anderen Kupplung derart gesteuert wird, dass der Motor während des Schaltens zumindest teilweise mit einer seiner Höchstleistung entsprechenden Drehzahl läuft.

6. Verfahren zum Vergrößern der Übersetzung eines im Antriebsstrang eines Kraftfahrzeugs enthaltenen, seine Übersetzung zugkraftunterbrechungsfrei automatisch verändernden Getriebes, insbesondere Parallelschaltgetriebes (10), bei welchem Verfahren bei einer unter Last erfolgenden Vergrößerung der Übersetzung des Getriebes die Aufteilung der Motorleistung in einen für die Drehzahlerhöhung des Motors verfügbaren Teil und einen für den Vortrieb des Fahrzeugs verfügbaren Teil abhängig von Betriebszuständen des Antriebsstrangs verändert wird.

7. Verfahren nach Anspruch 6, wobei der für die Drehzahlerhöhung des Motors verfügbare Teil der Motorleistung mit zunehmend rascher Betätigung des Fahrpedals vergrößert wird.

8. Verfahren nach Anspruch 7, wobei bei einer Übersetzungserhöhung ohne Veränderung der Stellung des Fahrpedals (73) die Motorleistung weitgehend für den Vortrieb des Fahrzeugs genutzt wird.

9. Verfahren zum Steuern eines Parallelschaltgetriebes, bei welchem Verfahren bei im Schubzustand befindlichen Getriebe vor dem Unterschreiten einer Mindestgeschwindigkeit des Fahrzeugs und vor dem Auskuppeln eines aktivierten Fahrgangs ein Anfahrgang eingelegt wird.

10. Vorrichtung zum Steuern der Übersetzungsänderung eines im Antriebsstrang eines Kraftfahrzeugs enthaltenen Getriebes mit unter Last veränderbarer Übersetzung, enthaltend
ein Getriebe (10)
Aktoren (24, 26, 52, 54) zur Veränderung der Übersetzung des Getriebes und ein mit im Antriebsstrang des Kraftfahrzeugs enthaltenen Sensoren (70, 72, 74, 78) verbundenes Steuergerät (60) mit einem Mikroprozessor (62) und zugehörigen Speichern (64, 76), welches Steuergerät die Aktoren zur Durchführung des Verfahrens nach einem der Ansprüche 1 bis 9 steuert.
